# FASCICULE DE BREVET EUROPEEN

(11) **EP 1 396 767 B1**
(45) Date de publication et mention de la délivrance du brevet: **09.12.2009**
(21) Numéro de dépôt: 02078631.5
(22) Date de dépôt: 04.09.2002
(51) Int. Cl.: G04G 1/04, G01C 5/06, B63C 11/32

(54) **Montre électronique de plongée à affichage analogique**
Elektronische Taucheruhr mit Analoganzeige
Electronic diver's watch with analog display

(43) Date de publication de la demande: 10.03.2004
(73) Titulaire: ASULAB S.A., 2074 Marin (CH)
(72) Inventeur: Germiquet, Christophe, 2515 Prêles (CH); Berseth, Vincent, 1054 Morrens (CH); Born, Jean-Jacques, 1110 Morges (CH)
(74) Mandataire: Ravenel, Thierry Gérard Louis

(56) Documents cités:
- WO-A-00/68743
- CH-A- 495 576
- US-A- 5 189 646

## Description

La présente invention concerne une montre électronique comportant des fonctions dédiées à la pratique de la plongée. Plus précisément, la montre de plongée selon la présente invention est du type comportant un boîtier étanche contenant un mouvement horloger surmonté d'un cadran, la montre comportant au moins des premières graduations, ledit mouvement horloger comprenant des circuits électroniques susceptibles de produire des signaux horaires à destination de moyens moteurs commandant respectivement au moins un premier et un second organes d'affichage analogiques, lesdits organes d'affichage étant disposés au-dessus du cadran pour afficher l'heure courante dans un premier mode de fonctionnement horaire, la montre comprenant en outre un capteur de pression susceptible de produire des signaux électriques représentatifs de la pression environnante et de fournir lesdits signaux auxdits circuits électroniques, la montre de plongée ayant au moins un second mode de fonctionnement, ou mode plongée, dans lequel est prévu un affichage de données relatives à la pratique de la plongée.

Des produits similaires ont déjà été décrits dans l'art antérieur. Le brevet US 4,783,772, en particulier, décrit une montre électronique analogique dotée d'un capteur de pression lui permettant d'afficher des données relatives à la pratique de la plongée. Ces données, ainsi que des informations relatives à des fonctions supplémentaires telles qu'une alarme, par exemple, sont affichées sur un écran à cristaux liquides additionnel, disposé à douze heures sur le cadran de la montre susmentionnée.

Toutefois, la nature des informations disponibles sur le produit décrit est limitée à des informations du type profondeur instantanée, durée de la plongée en cours, profondeur maximale atteinte. Par conséquent, l'exploitation de ces informations en termes de sécurité nécessite le recours à des tables de décompression indépendantes pour définir les paramètres de la remontée, notamment la détermination de la durée maximale pendant laquelle l'utilisateur peut rester en plongée avant de devoir effectuer au moins un palier de décompression.

De même, aucune information n'est fournie en ce qui concerne les paliers de décompression à effectuer éventuellement lors de la remontée d'une plongée. En outre, la lisibilité de l'écran à cristaux liquides est limitée du fait de ses faibles dimensions, en particulier dans les conditions d'une immersion.

Le document WO 00/68743 décrit une montre avec affichage de l'heure, détection des conditions de pression sous-marine et affichage de données de remontée.

Un premier but de la présente invention est de pallier les inconvénients susmentionnés de l'art antérieur en fournissant une montre de plongée indiquant à son utilisateur des informations relatives à sa sécurité lors de sa plongée.

Un autre but de l'invention est de proposer une montre de plongée permettant à son utilisateur de prendre connaissance des informations susmentionnées avec une grande facilité, autrement dit de réaliser une montre de plongée présentant une bonne lisibilité de ces informations.

Dans ce but, l'invention prévoit notamment une montre de plongée du type indiqué plus haut, caractérisée par le fait que lesdites premières graduations servent notamment à l'indication d'une profondeur, en ce que lesdits circuits électroniques comprennent des premiers moyens pour commander le premier organe d'affichage analogique, dans ledit mode plongée, pour indiquer la profondeur instantanée en liaison avec lesdites premières graduations et, en ce que lesdits circuits électroniques comprennent également des seconds moyens susceptibles de définir quasiment à chaque instant une profondeur minimale à ne pas dépasser par le porteur de la montre lors de la remontée d'une plongée, calculée à partir d'un algorithme de décompression sensiblement continue, et de commander ledit second organe d'affichage analogique pour indiquer ladite profondeur à ne pas dépasser en liaison avec lesdites premières graduations sensiblement en temps réel.

Il est également prévu que les seconds moyens des circuits électroniques sont en outre susceptibles de définir des paramètres de décompression discontinue comprenant au moins un palier à effectuer lors de la remontée d'une plongée, calculés à partir de l'algorithme, un palier étant notamment défini par sa profondeur et sa durée, et de commander séquentiellement le second organe d'affichage, dans le mode plongée, pour indiquer, dans un premier temps, la profondeur d'au moins un palier à effectuer lors de la remontée en liaison avec lesdites premières graduations, et pour indiquer, dans un second temps, que le plongeur peut refaire surface.

Dans le cas où plusieurs paliers de décompression sont à respecter lors de la remontée d'une plongée, des moyens sont prévus pour commander le second organe d'affichage pour indiquer leurs profondeurs respectives de manière séquentielle, ce qui sera décrit en détail plus loin dans la présente demande.

Il est important de noter que dans la mesure où l'affichage des données relatives à la plongée est réalisé par les organes d'affichage analogiques utilisés en temps normal pour l'affichage de l'heure, une excellente lisibilité est assurée. En outre, du fait de la structure retenue, une lecture relative des positions respectives des organes d'affichage est possible et procure une certaine synergie. En effet, lors de la remontée d'une plongée, le second organe d'affichage est positionné sur la profondeur du palier de décompression le plus profond à effectuer, le premier organe d'affichage indiquant la profondeur instantanée.

La détermination des paramètres des paliers de décompression respectifs est réalisée sur la base de divers algorithmes obtenus suite à de nombreuses études médicales ayant porté sur l'étude de décompression des gaz dans l'organisme humain. Le choix de l'algorithme ne présente pas beaucoup d'importance ni pour la compréhension de la présente invention, ni pour sa mise en oeuvre par l'homme du métier, qui pourra choisir un algorithme parmi les plus récents généralement reconnus dans le milieu de la plongée.

On pourra par exemple utiliser un algorithme basé sur les modèles de Haldane, de Bühlmann ou encore sur l'une de leurs variantes tenant compte des microbulles, comme par exemple les modèles VPM ("Varying Permeabilty Model") de Yount, ou RGBM ("Reduced Gradient Bubble Model") de Wienke.

Ces algorithmes permettent aussi d'effectuer la décompression des gaz dissous dans l'organisme du plongeur pendant la plongée de manière continue, autrement dit sans effectuer de palier de décompression mais en respectant des conditions particulières de remontée. Dans ce but, ces algorithmes définissent à chaque instant une pression minimale, à partir de laquelle on peut déduire une profondeur minimale, à laquelle le plongeur peut être exposé sans se mettre en danger, en fonction de son état physiologique.

Ainsi, quel que soit le type d'algorithme retenu pour la réalisation de la montre selon l'invention, le plongeur peut facilement vérifier qu'il se trouve à une profondeur ne présentant pas de danger pour sa santé par une simple lecture des positions relatives des deux organes d'affichage. Le plongeur doit garder à l'esprit, pendant sa remontée, que la position du premier organe d'affichage ne doit pas remonter, dans le sens de rotation anti-horaire, au-delà de la position du second organe d'affichage. Cette lecture est avantageuse dans la mesure où elle est plus intuitive que la lecture d'une indication portée sur un cadran en regard de laquelle est positionné un organe d'affichage. De même, cette lecture est plus intuitive que la lecture de deux informations distinctes, affichées sur un ou deux écrans à cristaux liquides, et qui doivent être mises en relation l'une avec l'autre.

De manière générale, il est prévu de recourir à des moyens pour activer, à partir du mode de fonctionnement horaire, un mode de fonctionnement plongée, de manière automatique. Il est bien entendu possible de recourir à une activation de type manuel de ce mode de fonctionnement, par exemple, par pression sur un poussoir.

Dans un mode de réalisation préféré de la présente invention, des moyens sont prévus pour commander l'aiguille des minutes pour afficher la profondeur sensiblement en temps réel, et l'aiguille des heures pour afficher les informations relatives à la plongée, en particulier celles qui concernent la sécurité du porteur de la montre ou plongeur.

Préférablement, la montre selon l'invention comporte des secondes graduations comprenant au moins une première zone permettant d'indiquer au plongeur, en liaison avec l'aiguille des heures, que son organisme présente des modifications physiologiques mineures par rapport à son état normal, ces modifications étant liées à la pratique de la plongée. Ce cas de figure s'applique, bien entendu, lorsque le plongeur est en surface après être remonté d'une plongée, ou lorsqu'il est en début d'une plongée dont l'historique, en termes de profondeur et de durée, ne nécessite pas qu'un palier de décompression soit effectué lors de la remontée.

En particulier, des moyens sont prévus pour positionner l'aiguille des heures dans la première zone des graduations supplémentaires pour indiquer au porteur de la montre la valeur de l'altitude qu'il ne devra pas dépasser après la plongée en cours, cette valeur étant fonction des modifications physiologiques mentionnées ci-dessus. En outre, la position de l'aiguille des heures par rapport aux extrémités de la première zone, pendant la plongée, peut permettre au plongeur d'évaluer grossièrement la durée maximale restante avant de devoir effectuer un palier de décompression lors de la remontée.

En effet, tant que le plongeur ne descend pas à plus de quelques mètres de profondeur, il peut rester immergé plusieurs heures sans avoir à effectuer un palier de décompression lors de la remontée, en faisant l'hypothèse que la plongée en cours est la première depuis au moins une dizaine d'heures. Des moyens sont prévus pour mesurer la pression environnante et relier les mesures de pression au temps, et pour en déduire, par des calculs basés sur un algorithme, la durée maximale restante sans avoir à effectuer un palier de décompression lors de la remontée.

Dans une variante préférée, la montre de plongée selon la présente invention comporte au moins un organe de commande extérieur et au moins un écran d'affichage à cristaux liquides, préférablement deux. Des moyens sont également prévus pour commander ces écrans à cristaux liquides pour permettre l'indication d'informations supplémentaires au plongeur, la nature de ces informations variant avec les modes de fonctionnement.

Il est également prévu de mettre en oeuvre un troisième mode de fonctionnement, ou mode de démonstration, accessible par action sur un organe de commande à partir du mode de fonctionnement horaire. Dans le mode démonstration, des moyens peuvent être prévus pour commander aux aiguilles des heures et des minutes de reproduire leur comportement d'une des dernières plongées à vitesse accélérée. On peut alors également prévoir d'afficher sur les deux écrans à cristaux liquides, respectivement, la profondeur maximale atteinte et la durée totale de la plongée.

L'invention sera mieux comprise à l'aide de la description suivante de différents exemples d'exécution en référence aux dessins annexés, dans lesquels :
- la figure 1 est une vue de face de la montre de plongée, dans une première situation, selon un mode de réalisation préféré de la présente invention;
- la figure 2 est une vue de face de la montre de plongée, dans une seconde situation, selon un mode de réalisation préféré de la présente invention;
- la figure 3 est une vue de face de la montre de plongée, dans une troisième situation, selon un mode de réalisation préféré de la présente invention;
- la figure 4 est un diagramme schématique général du circuit électronique de la montre de plongée selon la présente invention, et
- la figure 5 est une vue de face de la montre de plongée dans une variante du mode de réalisation présenté sur les figures précédentes.

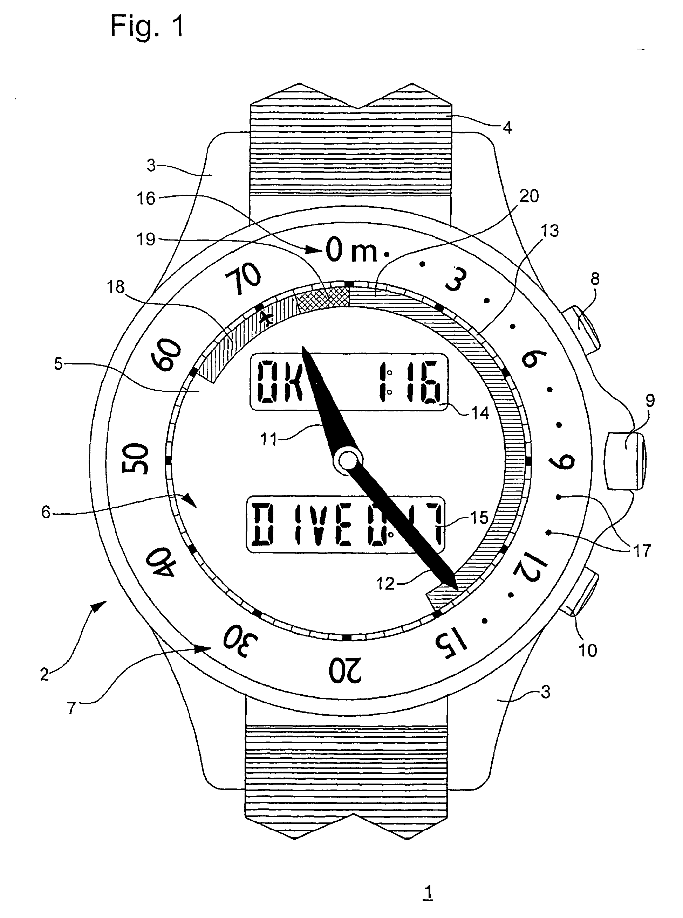

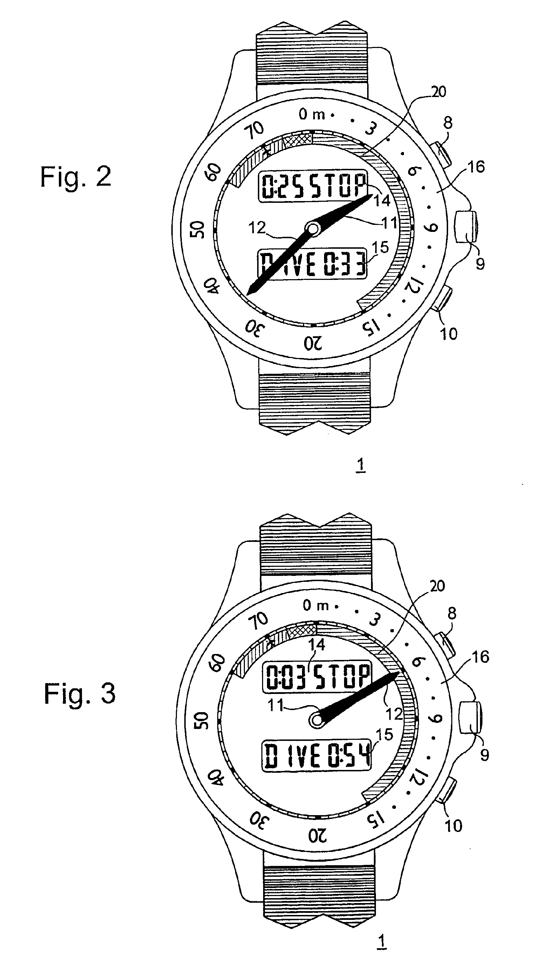

Les figures 1 à 3 représentent la montre de plongée 1 selon la présente invention dans un mode de réalisation préféré, la montre étant dans un mode de fonctionnement relatif à la pratique de la plongée, autrement dit dans le mode plongée. Ces figures représentent l'apparence de la montre 1 à des étapes différentes d'une même plongée, prises dans l'ordre chronologique. La figure 1 correspond à un stade peu avancé de la plongée, tandis que la figure 2 correspond à un stade plus avancé de cette même plongée, la figure 3 correspondant à la remontée.

Comme cela apparaît sur les figures 1 à 3, la montre 1 se présente en apparence comme une montre de type conventionnel. Elle comporte un boîtier 2 pouvant, par exemple, être du type métallique comprenant une carrure dans laquelle un fond est vissé ou maintenu par friction. Le boîtier 2 comprend des cornes 3 prévues pour l'attache d'un bracelet 4 et contenant notamment un mouvement horloger (non représenté), un cadran 5 est fermé sur sa face supérieure par une glace 6, portant une lunette fixe 7 sur sa périphérie, la lunette étant solidaire de la carrure. De manière classique, des organes extérieurs de commande sont prévus sous la forme de trois poussoirs latéraux 8, 9 et 10.

Pour l'affichage analogique de l'heure, il est prévu des aiguilles des heures 11 et des minutes 12 qui coopèrent avec une graduation horaire 13 classique sur le cadran. Ces aiguilles 11 et 12 sont utilisées aussi pour afficher d'autres indications, comme on le décrira plus loin.

En outre, la montre 1 comporte deux écrans à cristaux liquides (LCD) 14, 15, placés de préférence sous des fenêtres transparentes du cadran 5 et destinés à afficher des informations diverses, mentionnées plus loin, sous forme alphanumérique, voire éventuellement graphique. Bien entendu, on peut prévoir que la montre comporte un seul écran LCD et, éventuellement que celui-ci recouvre sensiblement toute la surface du cadran 5.

Etant donné que la présente invention se rapporte essentiellement aux moyens utilisés pour fournir des informations relatives à la pratique de la plongée, les autres fonctions de la montre ne seront pas décrites en détail ici. Toutefois, il est envisageable de prévoir d'autres fonctions, par exemple un chronographe, une alarme, une indication de fin de vie de pile, une mise à l'heure radio-commandée, la réception d'appels par radio (paging), etc. En outre, des moyens d'illumination sont prévus au moins pour illuminer les écrans LCD 14 et 15, et éventuellement le cadran 5, ces moyens étant activés, par exemple, en réponse à une action sur un des organes de commande 8, 9, ou 10 de la montre.

La lunette 7 porte des graduations 16 spécifiques, utilisées dans le mode plongée pour indiquer une profondeur, préférablement de 0 à 70 mètres. On peut noter que des points de repérage 17 sont prévus sur la lunette 7, entre les profondeurs 0 et 15 mètres, pour faciliter une lecture précise de la profondeur dans ce domaine.

Le cadran comporte en outre des graduations supplémentaires subdivisées en trois zones adjacentes, préférablement repérées par des couleurs différentes. La première zone 18 s'étend, dans le sens horaire, entre les positions des graduations horaires correspondant respectivement à 50 minutes et 57 minutes, la seconde zone 19 s'étend entre les positions 57 minutes et 60 minutes et, la troisième zone 20 est située entre les positions 60 et 25 minutes, ces dernières positions correspondant respectivement aux profondeurs 0 et 15 mètres.

L'utilisation de ces diverses indications pour l'affichage d'informations relatives à la plongée est exposée en détail ci-dessous.

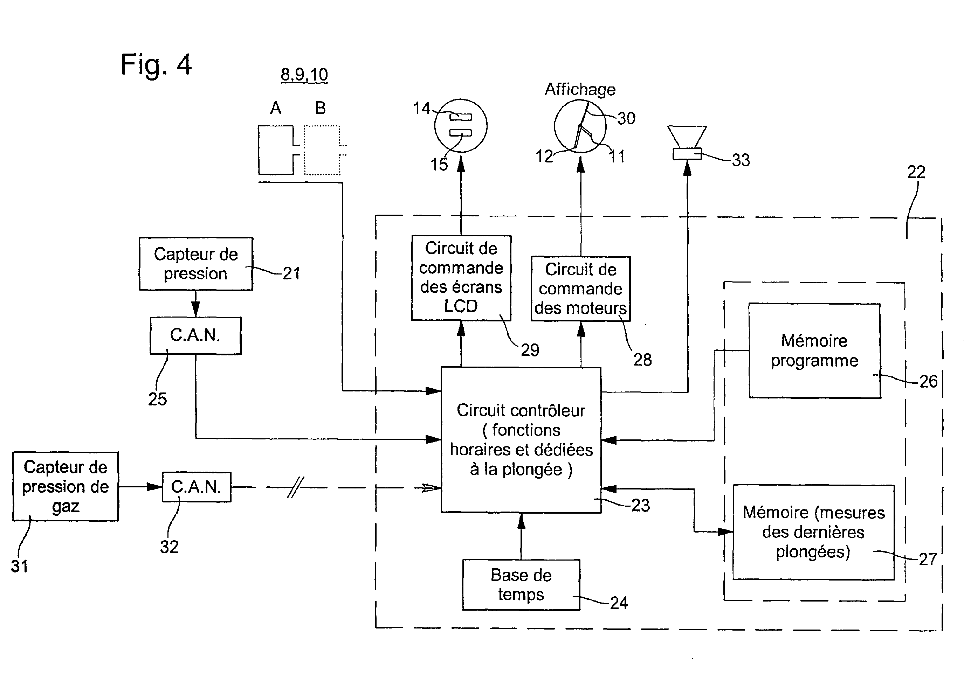

La montre 1 comporte des moyens techniques particuliers, qui seront rapidement décrits plus loin en relation avec la figure 4, lui permettant de fournir des indications vitales pour son porteur dans le cadre de la pratique de la plongée. Ces moyens techniques comprennent notamment un capteur de pression 21 permettant de mesurer à chaque instant la pression de l'environnement extérieur à la montre 1 et, convertir cette dernière valeur en profondeur dans le cadre de la plongée.

Ce type de construction ainsi que les calculs effectués pour exploiter les mesures du capteur de pression ont été décrits dans de nombreux documents de l'art antérieur et ne seront pas abordés plus en détail par la suite. On pourra notamment consulter le brevet US 4,783,772, cité plus haut, dans lequel des exemples de réalisation des aspects susmentionnés sont fournis.

De même, la construction de la montre 1 selon la présente invention, plus particulièrement en ce qui concerne son mouvement, ne sera pas exposée plus en détail ici, dans la mesure où de tels mouvements ont déjà été décrits dans l'art antérieur. En effet on peut consulter, à titre d'exemple, le brevet européen N° 0 589 353 qui décrit la réalisation d'une montre électronique analogique dont les aiguilles d'heures et de minutes sont commandées par des moteurs indépendants. En particulier, ce brevet européen décrit comment utiliser les aiguilles d'heures et de minutes pour afficher d'autres informations que l'heure et la minute.

Des moyens conventionnels sont prévus pour effectuer un changement de mode de fonctionnement de manière automatique, en particulier pour passer du mode horaire à un second mode de fonctionnement, appelé mode plongée, lorsque débute une plongée. Ces moyens permettent inversement de revenir au mode horaire, de manière automatique, à partir du mode plongée lorsque le plongeur, porteur de la montre 1, refait surface. Dans ce but, on peut par exemple recourir à l'utilisation de deux contacts ohmiques (non représentés) dont chacun a une partie située à l'extérieur du boîtier 2 de la montre 1, cette partie externe entrant donc en contact avec l'eau lors d'une plongée. Ces deux contacts constituent ainsi un interrupteur, ouvert lorsque la montre 1 est en dehors de l'eau et fermé lorsqu'elle est immergée dans l'eau. La fermeture de cet interrupteur entraîne l'activation automatique du passage en mode plongée. Un autre mode de réalisation possible pour détecter une immersion de la montre consiste à disposer au moins une électrode dans la glace de la montre de façon à former un condensateur à capacité variable avec la surface supérieure de la glace permettant de détecter la présence d'eau sur la glace. On peut également imaginer l'exploitation des signaux fournis par le capteur de pression 21, soit de manière alternative par rapport à ce qui vient d'être décrit, soit en complément pour enclencher ou déclencher le mode plongée. Dans ce cas, les circuits électroniques de la montre peuvent être adaptés, pour activer le mode plongée en réponse à la détection d'une augmentation de la pression environnante au-delà d'une valeur prédéfinie.

Bien entendu, on peut prévoir sous forme d'alternative ou en complément des moyens d'activation manuel du mode plongée, de type conventionnel.

Ces moyens, automatiques ou manuels ne seront pas abordés davantage dans la présente demande de brevet, dans la mesure où ils ne constituent pas le coeur de la présente invention.

Une fois le mode plongée activé, les fonctions respectivement associées aux aiguilles des heures 11 et des minutes 12 sont l'affichage d'informations relatives notamment à d'éventuels paliers à effectuer lors de la remontée de la plongée en cours et l'affichage de la profondeur instantanée.

Ainsi, lorsque le plongeur entre dans l'eau, ce qui active le mode plongée, les deux aiguilles 11 et 12 se positionnent, respectivement, au début de la première zone 18 des graduations supplémentaires, dans le cadre d'une "première plongée", et à douze heures, soit au début des premières graduations 16. Par "première plongée", on entend une plongée effectuée alors que l'organisme du plongeur ne présente pas de modification physiologique liée à la pratique de la plongée. Ainsi, cette expression englobe éventuellement des plongées réalisées suffisamment longtemps après des plongées antérieures pour que l'organisme du plongeur se soit rétabli.

Lorsque le plongeur descend, l'aiguille des minutes 12 se met à tourner dans le sens horaire pour indiquer la valeur de la profondeur instantanée en regard des premières graduations 16, tandis qu'initialement, l'aiguille des heures 11 tourne dans le sens horaire, en regard de la première zone 18 des graduations supplémentaires.

De manière générale, la durée maximale restante, sans avoir à effectuer un palier de décompression lors de la remontée, présente initialement une valeur très élevée, dans le cadre d'une première plongée, cette valeur diminuant de manière notable lorsque le plongeur descend sous quelques mètres de profondeur. Des moyens sont prévus pour mesurer et mémoriser la pression environnante en fonction du temps ainsi que pour commander l'aiguille des heures 11 pour la faire tourner jusque dans la seconde zone 19 des graduations supplémentaires, pour indiquer au plongeur que la durée maximale restante diminue de manière notable.

La lecture des informations fournies par la position de l'aiguille des heures 11 en regard des première et seconde zones 18 et 19 des graduations supplémentaires correspond à une indication de la pression environnante minimale à laquelle le plongeur peut s'exposer après la plongée pour ne pas risquer de problèmes de santé. Cette indication est réalisée sous la forme d'une altitude à ne pas dépasser, deux graduations consécutives correspondant à des altitudes distantes de 500 mètres. On note qu'un symbole représentant un avion est situé en regard de la graduation correspondant à une altitude de 2500 mètres. On admet en effet que, lors d'un vol commercial, l'organisme d'un passager d'avion subit une pression environnante équivalente à la pression régnant vers 2000 à 2500 mètres d'altitude.

De manière générale, l'altitude maximale à ne pas dépasser et la durée maximale restante avant de devoir effectuer un palier de décompression lors de la remontée sont liées de manière plus ou moins complexe. Ainsi, quel que soit l'algorithme retenu pour programmer la montre, la durée maximale restante avant de devoir effectuer un palier de décompression diminue progressivement lorsque le plongeur reste immergé sous une profondeur de l'ordre de quelques mètres, la vitesse de diminution augmentant avec la profondeur. D'autre part, la durée maximale restante se stabilise puis augmente dès que le plongeur évolue vers des profondeurs décroissantes.

On peut noter que la valeur de la durée restante atteint zéro lorsque l'altitude à ne pas dépasser atteint zéro (dans le cas d'une plongée en mer où l'altitude de la surface est nulle). Ainsi, un utilisateur averti peut évaluer le comportement de la valeur de la durée restante par rapport à la position de l'aiguille des heures 11 en relation avec la fin de la seconde zone 19.

Ainsi, dans la situation représentée sur la figure 1, le plongeur est à une profondeur de 14 mètres, ce qui est indiqué par la position de l'aiguille des minutes 12 en regard des premières graduations 16. La position de l'aiguille des heures 11 en regard de la première zone 18, à cet instant, lui indique qu'il ne pourra pas prendre l'avion immédiatement après la plongée en cours dans la mesure où son organisme a subi des modifications physiologiques non négligeables et, où l'altitude à ne pas dépasser est par conséquent de l'ordre de 2000 mètres.

En outre, on constate sur la figure 1 que les écrans LCD 14 et 15 sont mis à profit pour apporter un complément d'information au plongeur.

En effet, il est prévu dans ce mode de réalisation de commander l'écran 14 de telle manière qu'il affiche la valeur exacte de la durée maximale restante avant palier, à savoir 1 heure 16 minutes dans la situation représentée. De cette façon, le plongeur peut estimer sa situation par une première lecture rapide de la position approximative de l'aiguille des heures 11 par rapport aux graduations supplémentaires. Toutefois, lorsque le plongeur souhaite avoir une information plus précise de la situation, comme ici la valeur exacte de la durée maximale restante, celle-ci est accessible simultanément sur l'écran 14.

De même, l'écran 15 est utilisé pour afficher en situation normale de plongée, la durée écoulée de la plongée en cours, qui est égale à 17 minutes dans la situation de la figure 1.

On peut noter que si le plongeur remonte l'aiguille des heures 11 peut être commandée pour tourner dans le sens anti-horaire en regard de la première zone 18, pour indiquer que l'altitude à ne pas dépasser augmente progressivement.

Lorsque la durée maximale restante atteint une valeur nulle, des paliers de décompression sont à effectuer par le plongeur lors de la remontée. Une telle situation est représentée sur la figure 2.

Sur la figure 2, la montre de plongée 1 selon la présente invention indique au plongeur qu'il se trouve à une profondeur de 35 mètres et que la durée de la plongée en cours s'élève à 33 minutes, ces informations étant fournies respectivement par l'aiguille des minutes 12 et par l'écran 15. L'aiguille des heures 11 indique en regard des premières graduations 16 et de la troisième zone 20 des graduations supplémentaires, qu'en outre, des paliers de décompression seront à effectuer lors de la remontée, un premier de ces paliers, soit le plus profond, étant situé à une profondeur de 6 mètres.

On constate également que l'indication de l'écran 14 est différente de celle décrite en relation avec la figure 1. En effet, la durée maximale restante avant de devoir effectuer un palier de décompression étant nulle, il n'est plus nécessaire de l'afficher. De ce fait, l'écran 14 affiche alors une information qui présente un intérêt dans le cadre d'une plongée avec paliers, c'est-à-dire la durée totale des paliers de décompression à effectuer. Dans la situation de la figure 2, la montre 1 indique ainsi au plongeur que la durée totale des paliers de décompression qu'il devra effectuer est de 25 minutes.

Bien entendu, il est prévu que les circuits électroniques de la montre de plongée selon la présente invention traitent en permanence les données transmises par le capteur de pression 21, de façon à actualiser les informations fournies au plongeur quasiment en temps réel.

La figure 3 représente une situation correspondant à la dernière phase d'une plongée, à savoir la remontée et, notamment le suivi des paliers de décompression.

On constate sur cette figure que le plongeur est à une profondeur de 6 mètres et que la plongée dure depuis 54 minutes. En outre, l'aiguille des heures 11 est positionnée en regard de la graduation 6 mètres de même que l'aiguille des minutes 12, ce qui signifie que le plongeur est en train d'effectuer un palier de décompression à 6 mètres de profondeur. L'écran 15 indique dans ce cas la durée du palier de décompression en cours, qui est ici de 3 minutes.

La superposition des aiguilles des heures 11 et des minutes 12 lors d'un palier de décompression apporte une contribution avantageuse à la montre de plongée selon la présente invention. En effet, l'aiguille des heures 11 indiquant, lors de la remontée, la profondeur d'un prochain palier de décompression à effectuer et l'aiguille des minutes 12 indiquant la profondeur instantanée, celles-ci sont logiquement superposées lorsque le plongeur doit effectuer un palier de décompression à la profondeur à laquelle il se trouve. Ainsi, le plongeur sait, par une lecture rapide et facile des positions relatives des deux aiguilles indicatrices 11 et 12, qu'il se trouve à la bonne profondeur pour effectuer le palier. Il est également prévu de réaliser les aiguilles des heures 11 et des minutes 12 de telle manière qu'elles présentent des apparences visuelles respectives différentes pour améliorer leur différenciation lors d'une lecture rapide. On peut par exemple envisager l'utilisation de couleurs différentes pour les deux aiguilles. De même, le cadran 5 de la montre présente préférablement une apparence visuelle permettant d'obtenir un contraste élevé pour la visibilité des aiguilles 11 et 12 par rapport au cadran.

En outre, la disposition avantageuse qui vient d'être décrite présente un avantage supplémentaire en ce qu'elle permet au plongeur d'accéder à une information extrêmement importante pour sa sécurité avec une très grande lisibilité. En effet, pendant qu'il remonte, avant le premier palier de décompression ou entre deux paliers de décompression, le plongeur peut surveiller sa situation par de simples regards furtifs pour évaluer les positions relatives des aiguilles des heures 11 et des minutes 12. Lors d'une remontée en respectant les mesures de sécurité appropriées, l'aiguille des minutes 12, tournant dans le sens anti-horaire, ne doit en aucun cas prendre une position située à un niveau de profondeur plus faible que celui correspondant à la position de l'aiguille des heures 11. Une telle situation signifierait qu'un palier de décompression n'a pas été respecté par le plongeur pendant la remontée, ce qui l'exposerait à un grave danger.

On peut également prévoir de réaliser les trois zones 18, 19 et 20 des graduations supplémentaires dans des couleurs différentes, respectivement verte, orange et rouge, pour signaler un danger croissant dans cet ordre.

Bien entendu, on peut prévoir des moyens additionnels permettant d'activer une alarme sonore pour avertir le plongeur en cas de non respect d'un palier de décompression, comme cela a déjà été décrit dans l'art antérieur en relation avec des ordinateurs de plongée.

A partir de la situation représentée sur la figure 3, il est prévu que des circuits électroniques de la montre, brièvement décrits plus loin, détectent par une programmation adéquate que le plongeur a correctement effectué le palier de décompression à 6 mètres, notamment par le biais des calculs effectués sur la base de l'algorithme de décompression utilisé. Une fois ledit palier correctement effectué, l'aiguille des heures 11 se déplace jusqu'à la position des 3 mètres, soit par un saut, soit de manière continue, par exemple, en indiquant au plongeur une vitesse de remontée recommandée, par une vitesse de rotation adaptée. En effet, il est connu dans le domaine de la plongée que, lors de la remontée, le plongeur doit préférablement limiter sa vitesse d'ascension en dessous d'une valeur limite, généralement de l'ordre de 10 mètres par seconde.

De même, les circuits électroniques de la montre vérifient que le plongeur effectue correctement le palier à 3 mètres, après quoi l'aiguille des heures 11 est déplacée sur la fin de la seconde zone 19 des graduations supplémentaires, indiquant au plongeur qu'il peut refaire surface en toute sécurité.

On peut alors prévoir que le mode plongée soit désactivé automatiquement au bout d'un certain temps passé en surface, les aiguilles des heures 11 et des minutes 12 reprenant leur fonctions ordinaires dans le mode horaire.

Il est prévu un troisième mode de fonctionnement, activé à partir du mode horaire par pression sur un premier des poussoirs 10, par exemple. Dans ce mode de fonctionnement, l'aiguille des minutes 12 indique la profondeur maximale atteinte lors de la dernière plongée de manière analogique, tandis que l'écran 14 indique cette profondeur maximale de manière numérique, l'écran 15 indiquant la durée totale de la dernière plongée.

Par ailleurs, il est prévu que, dans le troisième mode de fonctionnement ou de manière générale en réponse à une action sur l'un des poussoirs 8 à 10 à partir du mode horaire, l'aiguille des heures 11 donne au plongeur une information relative à certaines modifications physiologiques éventuellement subies par son organisme du fait de la pratique de la plongée. Dans le cas où la ou les dernières plongées sont récentes, de telles modifications sont toujours présentes et, l'aiguille des heures 11 se positionne alors en regard de la première zone 18 ou de la seconde zone 19 des graduations supplémentaires de façon à indiquer l'altitude que le plongeur ne doit pas dépasser du fait de ces modifications. L'intérêt d'une telle indication concerne en particulier le cas où le plongeur souhaite faire un voyage en avion peu de temps après avoir pratiqué la plongée. En effet, la dépression subie par l'organisme du plongeur lors d'un voyage en avion peut mener à un accident de décompression si les modifications précitées n'ont pas suffisamment diminué. Le symbole d'avion, situé dans la première zone 18, est donc prévu pour rappeler l'existence de ce risque au plongeur. Ainsi, on peut également prévoir un affichage, sur au moins un des écrans LCD 14, 15, de la durée restante avant de pouvoir prendre l'avion lorsque les modifications physiologiques sont encore non négligeables. Une fois que les modifications sont redevenues insignifiantes, l'aiguille des heures 11 se positionne en regard du début de la première zone 18 pour indiquer au plongeur que tout danger a disparu. Dans ce cas, on peut également prévoir une indication, sur au moins un des écrans LCD 14, 15, pour signaler à l'utilisateur de la montre qu'il peut à nouveau prendre l'avion.

On peut alors prévoir un retour au mode horaire automatique ou obtenu par une nouvelle pression sur le premier poussoir 10.

D'autre part, on peut encore prévoir des moyens de mémorisation des paramètres de la dernière plongée et qu'une seconde pression sur le premier poussoir 10, dans un intervalle de temps court après la première pression par exemple, active un mode de fonctionnement supplémentaire, appelé mode de démonstration. De même, on peut prévoir que le circuit électronique de la montre 1 comporte suffisamment de mémoire pour mémoriser les paramètres des cinq ou dix dernières plongées, par exemple. Dans ce cas, on peut prévoir qu'une pression longue sur l'un des poussoirs 8 à 10, à partir du mode horaire, entraîne le passage en mode d'affichage des paramètres des dernières plongées, la sélection de la plongée souhaitée étant effectuée par des pressions courtes successives sur le même poussoir et, le retour au mode horaire étant préférablement automatique ou obtenu par une nouvelle pression longue sur le poussoir. Dans ce cas, les écrans LCD 14, 15 sont préférablement commandés, au moment de la sélection, pour afficher des données permettant d'identifier la plongée sélectionnée, telles que la date et l'heure de son début. Dans le même temps, les aiguilles des minutes et des heures peuvent être commandées pour afficher, respectivement, la profondeur maximale atteinte au cours de la plongée sélectionnée et la durée de ladite plongée, par exemple.

Bien entendu, l'homme du métier saura programmer la montre en fonction des séquences de commande qu'il souhaitera implémenter dans la montre selon l'invention, telles que des actions successives ou combinées sur un ou plusieurs des organes de commande.

Pour la mise en oeuvre de ce mode de démonstration, des moyens sont prévus pour commander les aiguilles des heures 11 et des minutes 12, de telle manière qu'elles reproduisent à vitesse accélérée le comportement qu'elles ont respectivement présentées lors de la dernière plongée. On peut, par exemple, programmer les circuits électroniques de la montre pour qu'une minute de la dernière plongée soit reproduite en une seconde dans le mode de démonstration.

Le mode de démonstration présente un intérêt majeur en matière de sécurité, car il permet de visualiser rapidement le profil de la dernière plongée qui constitue une information extrêmement importante pour un médecin appelé suite à un accident de plongée. Habituellement, un médecin peut effectuer la visualisation du profil de plongée par transfert de données à partir d'un ordinateur de plongée sur un terminal de lecture et d'exploitation, éventuellement du type ordinateur personnel. Le mode de démonstration selon la présente invention procure un avantage sur les dispositifs appartenant à l'état de la technique en termes de rapidité d'accès à ces informations.

En outre, les avantages exposés plus haut, concernant la lisibilité de la montre de plongée 1 selon l'invention, s'appliquent également à l'utilisation du mode de démonstration. La visualisation du profil de la dernière plongée est en effet assez aisée à partir de l'observation du déplacement des aiguilles des heures 11 et des minutes 12 en vitesse accélérée. Il est notamment très facile de constater un éventuel non respect d'un palier de décompression par l'observation des positionnements relatifs des aiguilles des heures 11 et des minutes 12, en particulier dans la phase de remontée, pour les raisons précitées.

D'autre part, on peut également prévoir une adaptation des échelles de temps et de profondeur en fonctions des valeurs respectives de la durée et de la profondeur de la plongée reproduite. Une telle disposition permet d'afficher, avec une bonne lisibilité, les paramètres relatifs à une plongée en apnée, par exemple. Dans ce dernier cas, on peut programmer la montre selon l'invention pour que la démonstration se fasse en temps réel et pour qu'une variation de profondeur de 1 mètre soit représentée par une variation de 10 minutes sur son cadran. Bien entendu, ces valeurs ne sont données ici qu'à titre indicatif et l'homme du métier est capable de les modifier sans faire face à des difficultés particulières.

On peut bien entendu prévoir d'afficher des informations complémentaires sur les écrans LCD 14 et 15 dans le mode démonstration, telles que la profondeur maximale atteinte dans la plongée correspondante ou le signalement d'alarmes intervenues au cours de celle-ci, par exemple.

La figure 4 est un diagramme schématique de la structure générale des circuits électroniques de la montre de plongée 1 selon la présente invention.

De manière générale, le circuit électronique de la montre comprend notamment un circuit intégré 22 comportant un circuit contrôleur 23 susceptible de gérer les fonctions horaires conventionnelles de la montre 1 comprenant, dans ce but, un circuit de division du temps et relié notamment à un résonateur 24 fournissant une base de temps. A partir de cette base de temps, des informations temporelles sont produites par le circuit contrôleur 23, notamment pour assurer les fonctions du mode horaire et les fonctionnalités relatives au mode plongée.

En outre, le circuit contrôleur 23 reçoit des signaux produits par le capteur de pression 21 générant des signaux électriques analogiques représentatifs de la pression environnante. Ces signaux transitent par un convertisseur analogique-numérique 25 avant d'être fournis en entrée du circuit contrôleur 23, sous la forme d'un signal digital.

Le capteur de pression 21 est de type conventionnel et l'homme du métier ne rencontrera pas de difficulté particulière pour en choisir un qui soit adapté à la mise en oeuvre de la présente invention.

Le circuit intégré 22 comporte également des zones de mémoire, notamment une première zone de mémoire 26, préférablement de type non volatile, contenant un programme permettant au circuit contrôleur 23 d'effectuer les calculs relatifs au mode plongée, sur la base d'un algorithme de décompression. Le choix d'une mémoire non volatile reprogrammable (Flash ou EEPROM, par exemple) permet éventuellement de modifier ultérieurement le programme de calcul en fonction de l'algorithme de décompression retenu. Le circuit intégré 22 comporte de manière préférée au moins une seconde zone de mémoire 27, également de type non volatile, dans laquelle les mesures ainsi que les résultats des calculs effectués par le circuit contrôleur 23 sont stockés périodiquement. Cette seconde zone de mémoire 27 est notamment prévue pour stocker les mesures de profondeur et les mesures temporelles correspondantes relatives à la ou aux dernières plongées, le cas échéant. Ainsi, ces informations sont consultées par le circuit contrôleur 23, en particulier lorsque la montre est dans le mode de démonstration.

A partir de ces signaux d'entrée respectifs, le circuit contrôleur 23 détermine la situation et l'état du plongeur à chaque instant, du point de vue de la pratique de la plongée. Dans ce but, on peut notamment prévoir qu'en mode horaire, une mesure de pression est effectuée toutes les cinq minutes et qu'en mode plongée, une mesure de pression est effectuée toutes les deux secondes, par exemple. A partir de toutes ces mesures périodiques et sur la base du programme stocké dans la première zone de mémoire 26, le circuit contrôleur 23 détermine quel est l'état physiologique du plongeur, c'est-à-dire un certain nombre de paramètres pertinents pour sa santé, comme en particulier, le taux résiduel d'azote dissout dans son organisme, la quantité de micro-bulles formées, le %CNS correspondant à une mesure de l'absorption d'oxygène à pression partielle élevée dont un excès peut entraîner une crise d'hyperoxie.

L'homme du métier n'aura aucun mal à programmer le circuit contrôleur 23 pour permettre un affichage de ces paramètres pertinents par au moins l'un des écrans LCD 14, 15, cet affichage étant éventuellement automatique, lorsque sa pertinence le justifie, ou commandé par une ou plusieurs actions, successives ou combinées, sur un ou plusieurs poussoirs 8 à 10.

L'algorithme de décompression est préférablement enregistré dans la première zone de mémoire 26, sous forme d'un programme informatique. Son exploitation, sur la base des informations mesurées et/ou calculées permet au circuit contrôleur 23 de calculer la valeur de la durée maximale restante pour la plongée en cours, avant que le plongeur soit obligé d'effectuer un palier de décompression lors de la remontée, ainsi que l'altitude à ne pas dépasser. Le circuit contrôleur 23 envoie alors des signaux adaptés à un circuit de commande 28 de moyens d'entraînement bi-directionnels, tels que des moteurs bi-directionnels par exemple, de telle manière que l'aiguille des heures 11 affiche l'altitude à ne pas dépasser en regard des deux premières zones 18 et 19 des graduations supplémentaires. De même, le circuit contrôleur envoie des signaux adaptés à un circuit de commande 29 des écrans LCD 14 et 15 de telle manière que l'écran LCD 14, par exemple et conformément à la figure 1, affiche la durée maximale restante avant de devoir effectuer un palier de décompression lors de la remontée. En outre, le circuit contrôleur 23 produit des signaux adaptés pour le circuit de commande 28 des moteurs bi-directionnels, de telle manière que l'aiguille des minutes 12 affiche la profondeur instantanée, en regard des premières graduations 16 portées par la lunette 7 de la montre.

Dans la mesure où il est prévu que le capteur de pression 21 effectue des mesures de la pression environnante de manière périodique et en permanence, que l'utilisateur de la montre soit en plongée ou en surface, les données fournies au circuit contrôleur 23 pour effectuer les calculs sur la base de l'algorithme de décompression sont suffisantes pour assurer une bonne précision des résultats. Ainsi, les plongées éventuellement réalisées de manière rapprochée sont également prises en compte pour évaluer l'état physiologique du plongeur. De même, si l'utilisateur de la montre se rend en altitude pour plonger en lac, il subit des pressions environnantes faibles et se trouve dans une phase de désaturation progressive. Ainsi, dans un premier temps, son état physiologique non complètement adapté à la pression environnante est pris en compte par la montre selon la présente invention en tant qu'état initial, puisque les mesures prises pendant cette courte période d'ascension par le capteur de pression 21 sont également intégrés dans l'utilisation du programme de la montre, l'algorithme utilisé prenant de tels paramètres en charge.

De ce fait, un avantage supplémentaire de la montre de plongée selon l'invention apparaît du fait de son esthétique. En effet, du fait de la discrétion de sa présentation, ce qui n'est généralement pas le cas des ordinateurs de plongée, la présente montre peut être portée en toute circonstance et donc en permanence. Ainsi, son utilisateur n'est pas obligé d'anticiper une plongée à venir pour porter la montre, dans le but d'assurer un suivi des pressions subies avant de plonger, dans la mesure où il peut la porter en permanence sans faire aucune concession d'ordre esthétique.

A partir des informations ou données ainsi récupérées, le circuit contrôleur 23 calcule la pression minimale à laquelle le plongeur peut être soumis en fonction de son état physiologique. Lorsque cette pression est inférieure à la pression de surface du plan d'eau dans lequel a lieu la plongée en cours, le circuit contrôleur 23 définit une valeur pour la durée maximale restante avant de devoir effectuer un palier de décompression.

Dans le cas contraire, lorsque la pression minimale à laquelle peut être soumis le plongeur est supérieure à la pression de surface, le plongeur doit effectuer au moins un palier de décompression lors de sa remontée, conformément aux algorithmes de décompression les plus couramment utilisés actuellement. Les paramètres de ces paliers de décompression, à savoir leurs profondeurs et durées respectives sont donc calculés par le circuit contrôleur 23, sur la base de l'algorithme utilisé, et sont indiqués par l'aiguille des heures 11, tel que décrit plus haut.

En outre, les circuits électroniques de la montre comportent des moyens conventionnels pour détecter des pressions effectuées par l'utilisateur sur les poussoirs 8 à 10 qui ne seront pas décrits en détail.

D'autre part, on peut noter qu'en pratique, toute plongée doit normalement comporter un palier, appelé palier de confort ou de sécurité, à quelques mètres de profondeur, généralement à 5 mètres et pendant quelques minutes, généralement 3 minutes, même en l'absence de risques liés au phénomène de décompression.

Selon un mode de réalisation préféré, le programme mémorisé dans les moyens de mémorisation 26 peut comporter une partie prévue pour imposer par défaut le respect de ce palier de sécurité, en indiquant au plongeur lorsqu'il effectue sa remontée, via le circuit contrôleur 23 et le circuit de commande 28, de s'arrêter à une profondeur prédéfinie pendant une durée prédéfinie avant de pouvoir refaire surface, à l'aide de l'aiguille des heures 11.

La structure du circuit électronique de la montre de plongée 1 selon la présente invention ne sera pas abordée plus en détail dans la mesure où elle ne constitue pas le coeur de l'invention. En outre, de nombreux exemples de réalisation sont disponibles dans des documents de l'art antérieur et l'homme du métier n'aura aucun mal à s'en procurer.

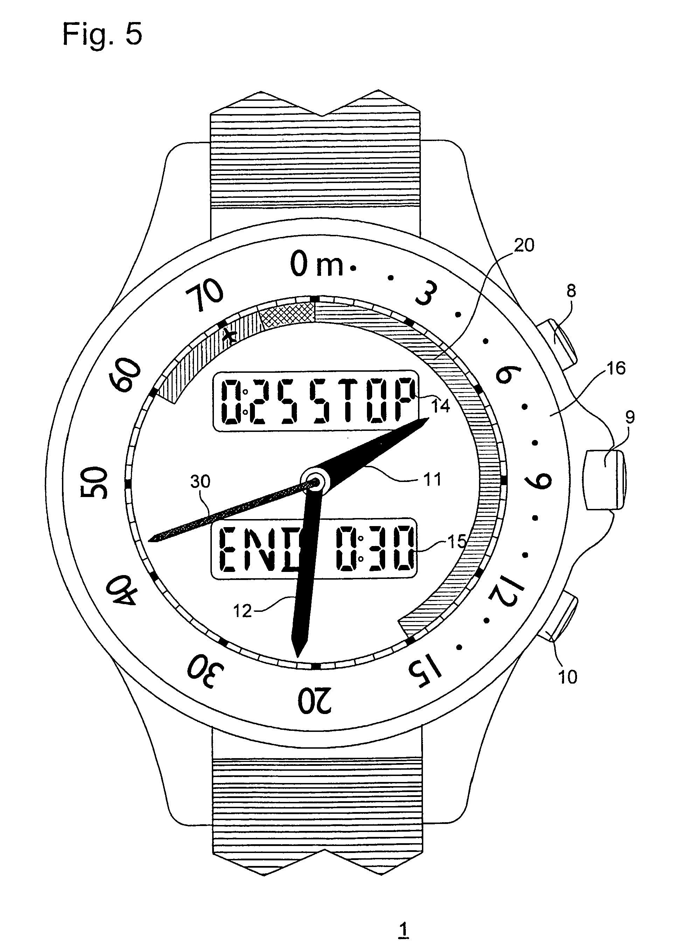

On peut prévoir la mise en oeuvre d'une variante avantageuse de la montre qui vient d'être décrite, par l'utilisation d'un troisième organe d'affichage analogique, préférablement une troisième aiguille. On a représenté une réalisation possible de cette configuration sur la figure 5 dans laquelle l'aiguille 30 est commandée pour indiquer les secondes dans le mode horaire, à titre d'exemple. La présence de cette troisième aiguille 30 peut alors être mise à profit pour fournir des indications supplémentaires à l'utilisateur de la montre dans le mode plongée.

En mode plongée, on peut par exemple prévoir de commander la troisième aiguille 30 pour qu'elle indique une profondeur à ne pas dépasser par le plongeur, calculée à partir de la valeur du %CNS mentionné plus haut. Ainsi, à chaque instant, l'aiguille des minutes 12, indiquant la profondeur instantanée doit être située entre les aiguilles des heures 11 et des secondes 30. On peut prévoir de manière alternative ou complémentaire que l'aiguille 30 indique la vitesse de remontée en regard des premières graduations 16 lorsque le plongeur entame la remontée de la plongée, afin qu'il ne dépasse pas la vitesse de remontée préconisée.

On peut également prévoir la mise en oeuvre d'une variante avantageuse dans laquelle l'aiguille 30 donne une indication au plongeur relative à l'autonomie pour la plongée en cours. La mise en oeuvre de cette variante nécessite l'adjonction d'éléments de construction supplémentaires par rapport au mode de réalisation précédemment décrit, la base de la construction restant similaire. Ainsi, les éléments techniques supplémentaires ont été représentés sur la figure 4.

En particulier, on peut prévoir des moyens pour mesurer la pression de gaz dans la bouteille du plongeur de manière à pouvoir notamment calculer l'autonomie correspondante et l'afficher éventuellement au moyen de l'un des écrans LCD 14, 15. Ces moyens sont conventionnels et sont par exemple décrits dans le brevet américain N° 4,882,678. On peut notamment utiliser un capteur piézoélectrique 31 (figure 4) connecté à la sortie de la bouteille de gaz pour en mesurer la pression, et délivrant un signal de sortie analogique traité ensuite par un convertisseur analogique-numérique 32 avant d'être délivré en entrée d'un circuit électronique (non représenté). On peut par exemple prévoir que ce dernier est un circuit de modulation et de transmission sans fil capable de communiquer avec un circuit récepteur (non représenté) situé dans la montre capable de fournir le signal reçu au circuit contrôleur 23. Un système émetteur-récepteur dans un dispositif électronique pour plongeur est décrit dans le brevet américain N° 4,949,072. L'homme du métier pourra consulter les deux brevets qui viennent d'être cités pour trouver des détails de mise en oeuvre de ces techniques qui ne seront pas davantage abordées dans le cadre de la présente invention.

L'algorithme ayant servi de base au programme de calcul mémorisé dans la zone de mémoire 26 intègre préférablement une prise en charge de la pression de gaz dans la bouteille du plongeur dans le but d'en calculer l'autonomie, quasiment en temps réel. Bien entendu, on peut prévoir alternativement un algorithme supplémentaire dédié notamment à ces calculs d'autonomie.

Le circuit contrôleur 23 traite les signaux représentatifs de la pression de gaz dans la bouteille par le biais de l'algorithme et en déduit l'autonomie de la bouteille en termes de temps de plongée restant.

Un avantage supplémentaire de la présente invention provient du fait que le temps de plongée restant n'est pas directement affiché par la montre. En effet, le circuit contrôleur 23 calcule, toujours sur la base de l'algorithme, quelle est en fonction du temps de plongée restant la profondeur maximale accessible par l'utilisateur de la montre. Ce calcul est effectué en tenant compte notamment de l'état physiologique du plongeur, c'est-à-dire en particulier des paramètres de la plongée en cours et des durées respectives des éventuels paliers de décompression qu'il aura à respecter lors de la remontée. Il est en outre préférable de prévoir une marge de sécurité sur le calcul du temps de plongée restant pour prévenir un manque d'attention de l'utilisateur. On peut par exemple utiliser une marge de 10% sur la pression de gaz dans la bouteille, autrement dit, on peut retrancher systématiquement 10% de la valeur initiale de la pression de gaz aux mesures effectuées en cours de plongée.

Le circuit contrôleur 23 produit, à partir des mesures de pression de gaz obtenues, des signaux adaptés pour le circuit de commande des moteurs 28 qui, dans la présente variante, commande un troisième moteur bi-directionnel entraînant l'aiguille des secondes 30, pour qu'elle indique la valeur de la profondeur maximale accessible par le plongeur, en relation avec les premières graduations 16.

On obtient ainsi un nouvel effet de synergie dans la mesure où le plongeur sait, en cours de plongée, que l'aiguille des minutes 12, indiquant sa profondeur, doit être située entre l'aiguille des heures 11, indiquant la profondeur minimale à laquelle le plongeur doit remonter pour des raisons de décompression, et l'aiguille des secondes 30, indiquant la profondeur maximale accessible pour des raisons d'autonomie en gaz de respiration. On peut dire, d'une autre manière, que l'aiguille des minutes 12 ne doit pas dépasser l'aiguille des secondes 30 pendant la descente, tandis qu'elle ne doit pas dépasser l'aiguille des heures 11 pendant la remontée. On retrouve donc la même facilité de lecture, par comparaison des positions relatives des trois aiguilles, dans la présente variante que dans le cas de deux seules aiguilles.

On peut également prévoir que l'un des écrans LCD 14 ou 15 est commandé par le circuit contrôleur 23, via le circuit de commande 29, pour afficher par défaut ou en réponse à une action sur l'un des poussoirs 8 à 10 la valeur du temps de plongée restant. Une telle situation a été représentée sur la figure 5, l'affichage du temps restant étant réalisé par l'écran LCD 15.

On peut mettre en oeuvre des moyens capables de remplir les fonctions d'une ou de plusieurs alarmes, dans la montre selon l'une quelconque des variantes précédemment décrites, notamment en prévoyant un émetteur acoustique tel qu'un élément piézoélectrique 33 (figure 4), commandé par le circuit contrôleur 23. On peut alors prévoir des fréquences de fonctionnement ou des séquences de signaux différentes pour indiquer des situations respectives différentes, tel qu'un dépassement de la profondeur maximale accessible, un dépassement de la profondeur minimale lors de la remontée, ou encore une vitesse de remontée trop rapide.

La description qui précède correspond à des modes de réalisation préférés de l'invention et ne saurait en aucun cas être considérée comme limitative, en ce qui concerne plus particulièrement la structure décrite pour la montre, les fonctions décrites, la nature et le nombre des organes de commande et des écrans LCD utilisés, les couleurs retenues ou encore l'emplacement des graduations. On peut notamment imaginer des variantes dans lesquelles la montre de plongée selon la présente invention comporte des fonctions supplémentaires telles qu'une fonction boussole ou une fonction thermomètre. De même, l'invention, qui est définie par les revendications, n'est pas limitée aux modes de fonctionnements décrits et moyens retenus pour leurs activations respectives dans la mesure où ces paramètres sont modifiables par une programmation adéquate du circuit contrôleur. L'homme du métier ne rencontrera pas de difficulté particulière pour adapter le fonctionnement de la montre selon la présente invention à ses propres besoins.

## Revendications

1. Montre de plongée électronique (1) comportant un boîtier (2) étanche contenant un mouvement horloger surmonté d'un cadran (5), la montre comportant au moins des premières graduations (16), ledit mouvement horloger comprenant des circuits électroniques (22) susceptibles de produire des signaux horaires à destination de moyens moteurs commandant respectivement au moins un premier (12) et un second (11) organes d'affichage analogiques, lesdits organes d'affichage étant disposés au-dessus du cadran (5) pour afficher l'heure courante dans un premier mode de fonctionnement horaire, la montre comprenant en outre un capteur de pression (21) susceptible de produire des signaux électriques représentatifs de la pression environnante et de fournir lesdits signaux auxdits circuits électroniques (22), la montre de plongée ayant au moins un second mode de fonctionnement, ou mode plongée, dans lequel est prévu un affichage de données relatives à la pratique de la plongée, **caractérisée en ce que** lesdites premières graduations (16) servent notamment à l'indication d'une profondeur, **en ce que** lesdits circuits électroniques (22) comprennent des premiers moyens susceptibles de commander le premier organe d'affichage (12), dans ledit mode plongée, pour indiquer la profondeur en liaison avec lesdites premières graduations (16) et, **en ce que** lesdits circuits électroniques comprennent également des seconds moyens susceptibles de définir quasiment à chaque instant une profondeur minimale à ne pas dépasser par le porteur de la montre lors de la remontée d'une plongée, calculée à partir d'un algorithme de décompression sensiblement continue, et de commander ledit second organe d'affichage (11) pour indiquer ladite profondeur à ne pas dépasser en liaison avec lesdites premières graduations (16) sensiblement en temps réel.

2. Montre de plongée selon la revendication 1, **caractérisée en ce que** lesdits seconds moyens sont en outre susceptibles de définir des paramètres de décompression discontinue comprenant au moins un palier à effectuer lors de la remontée d'une plongée, calculés à partir dudit algorithme, un palier étant notamment défini par sa profondeur et sa durée, et de commander séquentiellement ledit second organe d'affichage (11), dans ledit mode plongée, pour indiquer, dans un premier temps, la profondeur des paliers à effectuer lors de la remontée en liaison avec lesdites premières graduations (16) et pour indiquer, dans un second temps, que le plongeur peut refaire surface.

3. Montre de plongée (1) selon la revendication 2, **caractérisée en ce que** lesdits circuits électroniques (22) comprennent un circuit intégré comportant notamment une base de temps et susceptible de définir les profondeurs et durées respectives desdits paliers de décompression à effectuer, à partir notamment des signaux générés par le capteur de pression (21), le circuit intégré étant en outre susceptible d'effectuer une mesure d'intervalle de temps lorsque la profondeur instantanée atteint et se maintient à une valeur égale à la valeur de la profondeur définie pour l'un desdits palier et, commander ledit second organe d'affichage (11) pour indiquer la profondeur d'un palier suivant si la mesure effectuée d'intervalle de temps a atteint une valeur au moins égale à la durée définie pour ledit palier.

4. Montre de plongée (1) selon l'une quelconque des revendications 1 à 3, **caractérisée en ce qu'**elle comporte des graduations supplémentaires comportant au moins une première zone (18) en liaison avec laquelle ledit second organe d'affichage (11) est susceptible d'indiquer au porteur de la montre (1) que son organisme présente des modifications physiologiques, liées à la pratique de la plongée, par rapport à son état normal.

5. Montre de plongée (1) selon la revendication 4, **caractérisée en ce que** lesdites premières graduations comportent une seconde zone (19) présentant préférablement une couleur différente de celle de ladite première zone (18), lesdits seconds moyens étant susceptibles de commander ledit second organe d'affichage (11) pour indiquer en outre au porteur de la montre, en liaison avec ladite seconde zone (19), que son organisme présente des modifications physiologiques significatives liées à la pratique de la plongée.

6. Montre de plongée (1) selon la revendication 5, **caractérisée en ce que** lesdites première et seconde zones (18, 19) s'étendent sur un secteur présentant une ouverture angulaire au sommet d'au moins 15 degrés, préférablement 30 degrés, et **en ce que** lesdits circuits électroniques (22) comportent des moyens supplémentaires pour commander ledit second organe d'affichage (11), dans le mode plongée, pour indiquer une altitude à ne pas dépasser, en liaison avec les graduations situées dans lesdites première et seconde zones (18, 19), ladite altitude dépendant desdites modifications physiologiques présentées par l'organisme du porteur de la montre.

7. Montre de plongée (1) selon l'une quelconque des revendications précédentes, **caractérisée en ce qu'**elle comporte au moins un organe de commande (8, 9, 10) dont les mouvements sont détectés par lesdits circuits électroniques (22), et **en ce que** ces derniers (22) sont susceptibles de commander au moins ledit premier organe d'affichage (12), en mode plongée, pour qu'il indique la profondeur maximale atteinte pendant une plongée en cours en réponse à une pression sur ledit organe de commande (8, 9, 10).

8. Montre de plongée (1) selon l'une quelconque des revendications précédentes, **caractérisée en ce que** lesdits circuits électroniques (22) sont susceptibles de commander ledit second organe d'affichage (11), pour indiquer au moins un palier de durée et de profondeur prédéfinies, lors de la remontée, en liaison avec lesdites premières graduations (16).

9. Montre de plongée (1) selon l'une quelconque des revendications précédentes, **caractérisée en ce que** des moyens sont prévus pour détecter le début d'une plongée et activer automatiquement le mode plongée.

10. Montre de plongée (1) selon l'une quelconque des revendications précédentes, **caractérisée en ce que** les premier et second organes d'affichage analogiques sont respectivement une aiguille des minutes (12) et une aiguille des heures (11).

11. Montre de plongée (1) selon l'une quelconque des revendications précédentes, **caractérisée en ce qu'**elle comporte des moyens supplémentaires susceptibles de commander au moins un premier écran (14) à cristaux liquides pour afficher notamment au moins une première information relative à la pratique de la plongée complémentaire des informations fournies par lesdits premier (12) et second (11) organes d'affichage.

12. Montre de plongée (1) selon la revendication 11, **caractérisée en ce que** lesdits moyens supplémentaires sont également susceptibles de commander au moins un second écran (15) à cristaux liquides pour afficher au moins une seconde information relative à la pratique de la plongée complémentaire des informations fournies par lesdits premier (12) et second (11) organes d'affichage.

13. Montre de plongée (1) selon l'une quelconque des revendications précédentes, **caractérisée en ce que**, lorsque qu'elle comporte au moins un organe de commande (8, 9, 10), des moyens sont prévus pour activer un mode de fonctionnement supplémentaire, ou mode de démonstration, en réponse à une première action sur ledit organe de commande (8) à partir du mode de fonctionnement horaire, dans lequel chacun desdits organes d'affichage (11, 12) reproduit son comportement de la dernière plongée avec des échelles de temps et de profondeur adaptées aux paramètres de ladite plongée.

14. Montre de plongée (1) selon la revendication 13, **caractérisée en ce que** les circuits électroniques sont susceptibles de mémoriser les paramètres au moins des deux dernières plongées, de sélectionner les paramètres de l'une desdites dernières plongées en réponse à au moins une première action sur un organe de commande (8, 9, 10) et d'activer ledit mode de démonstration correspondant en réponse à au moins une seconde action sur un organe de commande (8, 9, 10).

15. Montre de plongée (1) selon la revendication 14 lorsqu'elle dépend de la revendication 11 ou 12, **caractérisée en ce que** les circuits électroniques (22) sont susceptibles de commander au moins un écran (14, 15) à cristaux liquides pour afficher au moins des données d'identification de celle desdites dernières plongées qui a été sélectionnée pour ledit mode de démonstration.

16. Montre de plongée (1) selon la revendication 15, **caractérisée en ce que** les circuits électroniques (22) sont susceptibles de commander ledit écran (14, 15) à cristaux liquides pour afficher en outre des informations relatives à la pratique de la plongée complémentaires des informations indiquées par lesdits organes d'affichage (11, 12) dans le mode de démonstration.

17. Montre de plongée (1) selon l'une quelconque des revendications précédentes, **caractérisée en ce qu'**elle comporte un troisième organe d'affichage analogique (30), les circuits électroniques de la montre étant susceptibles de commander ledit troisième organe d'affichage pour qu'il indique en regard desdites premières graduations (16), dans le mode plongée, une information relative à une profondeur complémentaire des informations indiquées par lesdits premier et second organes d'affichage analogiques (11, 12).

18. Montre de plongée (1) selon la revendication 17, **caractérisée en ce qu'**elle comporte en outre des moyens susceptibles de mesurer de la pression de gaz dans la bouteille de l'utilisateur de la montre, les circuits électroniques étant susceptibles de calculer, notamment à partir de ladite mesure de pression de gaz, l'autonomie restante sensiblement en temps réel et d'en déduire une valeur de profondeur à ne pas dépasser par l'utilisateur, lesdits circuits électroniques étant susceptibles de commander ledit troisième organe d'affichage (30) pour qu'il indique la valeur de ladite profondeur à ne pas dépasser, en relation avec lesdites premières graduations (16).

19. Montre de plongée (1) selon l'une des revendications 17 ou 18, **caractérisée en ce que** ledit troisième organe d'affichage (30) indique les secondes en mode horaire.

20. Procédé d'affichage de paliers de décompression à effectuer lors de la remontée d'une plongée sur une montre de plongée électronique à affichage analogique, la montre comportant un boîtier (2) étanche contenant un mouvement horloger surmonté d'un cadran (5), au moins des premières graduations (16) servant notamment à l'indication d'une profondeur, ledit mouvement horloger comprenant des circuits électroniques (22) comportant une base de temps et susceptible d'engendrer des signaux horaires à destination de moyens moteurs commandant respectivement au moins un premier (12) et un second (11) organes d'affichage analogiques, lesdits organes d'affichage étant disposés au-dessus du cadran (5) pour afficher l'heure courante dans un premier mode de fonctionnement horaire, la montre comprenant en outre un capteur de pression (21) susceptible de produire des signaux électriques représentatifs de la pression environnante et de fournir lesdits signaux électriques auxdits circuits électroniques (22), lesdits circuits électroniques comportant également des moyens de mémorisation (26, 27), dans lesquels est notamment mémorisé un programme informatique obtenu sur la base d'un algorithme de décompression et susceptible de définir au moins la durée et la profondeur d'au moins un palier de décompression, lesdits circuits électroniques (22) étant en outre susceptibles de traiter notamment les signaux générés par le capteur de pression (21) pour valider le respect du ou desdits paliers à effectuer lors de la remontée, la montre de plongée comportant au moins un second mode de fonctionnement, ou mode plongée, dans lequel est prévu un affichage de données relatives à la pratique de la plongée, le procédé comprenant notamment les étapes consistant à:
a) traiter les signaux générés par ledit capteur de pression (21) en relation avec lesdits signaux horaires lorsqu'ils sont représentatifs d'une plongée,
b) transmettre les résultats dudit traitement auxdits moyens de mémorisation (26, 27),
c) commander ledit premier organe d'affichage (12) sensiblement en temps réel pour qu'il indique la profondeur en regard desdites premières graduations (16),
d) définir au moins un palier à effectuer lors de la remontée lorsque les résultats dudit traitement par le biais de l'algorithme utilisé l'exigent, un palier étant notamment défini par sa profondeur et sa durée,
e) commander ledit second organe d'affichage (11) pour qu'il se positionne en regard de l'indication des premières graduations (16) correspondant à la profondeur du premier palier à effectuer,
f) commander ledit second organe d'affichage (11), lorsque les résultats dudit traitement indiquent que ledit palier a été effectué correctement, pour qu'il se positionne en regard de l'indication de la profondeur du palier suivant, dans le cas où il reste encore au moins un palier à effectuer, ou pour qu'il se positionne en regard de graduations supplémentaires (18, 19), portées par le cadran (5), indiquant qu'il peut refaire surface si le palier validé était le dernier palier à effectuer.

21. Procédé d'affichage selon la revendication 20, lorsque la montre de plongée comporte également au moins un écran (14, 15) à cristaux liquides,
**caractérisé en ce que** dans l'étape e), ledit écran affiche en outre la durée restante du palier en cours, ladite durée étant mise à jour sensiblement en temps réel en fonction des résultats dudit traitement.

22. Procédé d'affichage selon la revendication 20 ou 21, **caractérisé en ce que** lorsque les résultats dudit traitement par le biais de l'algorithme utilisé ne définissent pas de palier de décompression à effectuer lors de la remontée, il est prévu d'afficher un palier, appelé palier de confort, dont la durée et la profondeur présentent respectivement des valeurs prédéfinies, en reprenant les étapes e) et f) telles que définies dans la revendication 20.

## Claims

1. Electronic diving watch (1) comprising a sealed housing (2) containing a clock movement which is surmounted by a dial (5), the watch comprising at least first graduations (16), said clock movement comprising electronic circuits (22) which are able to produce time signals intended for motor means which control respectively at least a first (12) and a second (12) analog display organs, said display organs being disposed above the dial (5) in order to display the current time in a first time operating mode, the watch comprising furthermore a pressure sensor (21) which is able to produce electrical signals which are representative of the surrounding pressure and to supply said signals to said electronic circuits (22), the diving watch having at least a second operating mode, or diving mode, in which a display of data relating to the practise of diving is provided, **characterised in that** said first graduations (16) serve in particular for indicating a depth, **in that** said electronic circuits (22) comprise first means which are able to control the first display organ (12), in said diving mode, in order to indicate the depth in conjunction with said first graduations (16) and, **in that** said electronic circuits likewise comprise second means which are able to define almost continually a minimum depth which is not to be exceeded by the wearer of the watch during the ascent from a dive, calculated from a substantially continuous decompression algorithm, and to control said second display organ (11) in order to indicate said depth which is not to be exceeded in conjunction with said first graduations (16) substantially in real time.

2. Watch according to claim 1, **characterised in that** said second means are furthermore able to define discontinuous decompression parameters comprising at least one stage to be effected during the ascent from a dive, calculated from said algorithm, a stage being in particular defined by its depth and its duration, and to control sequentially said second display organ (11), in said diving mode, in order to indicate, in the first instance, the depth of the stages to be effected during the ascent in conjunction with said first graduations (16) and in order to indicate, in the second instance, that the diver can resurface.

3. Diving watch (1) according to claim 2, **characterised in that** said electronic circuits (22) comprise an integrated circuit which comprises in particular a time base and is able to define the respective depths and durations of said decompression stages which are to be effected, in particular from signals which are generated by the pressure sensor (21), the integrated circuit being furthermore able to effect a measurement of the time interval when the momentary depth attains and maintains itself at a value which is equal to the depth defined for one of said stages and to control said second display organ (11) in order to indicate the depth of a following stage if the effected time interval measurement has attained a value at least equal to the duration defined for said stage.

4. Diving watch (1) according to any of the claims 1 to 3, **characterised in that** it comprises additional graduations comprising at least a first zone (18) in conjunction with which said second display organ (11) is able to indicate to the wearer of the watch (1) that his body is undergoing physiological modifications, due to the practise of diving, with respect to his normal state.

5. Diving watch (1) according to claim 4, **characterised in that** said first graduations comprise a second zone (19) which preferably has a different colour to that of said first zone (18), said second means being able to control said second display organ (11) in order to indicate furthermore to the wearer of the watch, in conjunction with said second zone (19), that his body is undergoing significant physiological modifications linked to the practise of diving.

6. Diving watch (1) according to claim 5, **characterised in that** said first and second zones (18, 19) extend over a sector which has an angular opening at the top of at least 15 degrees, preferably 30 degrees, and **in that** said electronic circuits (22) comprise additional means in order to control said second display organ (11), in the diving mode, in order to indicate an altitude which is not to be exceeded, in conjunction with the graduations which are situated in said first and second zones (18, 19), said altitude depending upon said physiological modifications which are undergone by the body of the wearer of the watch.

7. Diving watch (1) according to any of the preceding claims, **characterised in that** it comprises at least one control member (8, 9, 10), the movements of which are detected by said electronic circuits (22), and **in that** these latter (22) are able to control at least said first display organ (12), in the diving mode, in order that it indicates the maximum depth attained during a dive in progress in response to an action on said control member (8, 9, 10).

8. Diving watch (1) according to any of the preceding claims, **characterised in that** said electronic circuits (22) are able to control said second display organ (11), in order to indicate at least one stage with predefined duration and depth, during the ascent, in conjunction with said first graduations (16).

9. Diving watch (1) according to any of the preceding claims, **characterised in that** means are provided in order to detect the start of a dive and to automatically actuate the diving mode.

10. Diving watch (1) according to any of the preceding claims, **characterised in that** the first and second analog display organs are respectively a minute hand (12) and an hour hand (11).

11. Diving watch (1) according to any of the preceding claims, **characterised in that** it comprises additional means which are able to control at least a first liquid crystal screen (14) in order to display in particular at least a first piece of information relating to the practise of diving, which information is complementary to information which is supplied by said first (12) and second (11) display organs.

12. Diving watch (1) according to claim 11, **characterised in that** said additional means are likewise able to control at least a second liquid crystal screen (15) in order to display at least a second piece of information relating to the practise of diving, which information is complementary to information supplied by said first (12) and second (11) display organs.

13. Diving watch (1) according to any of the preceding claims, **characterised in that**, when it comprises at least one control member (8, 9, 10), means are provided in order to actuate an additional operating mode, or historical mode, in response to a first action on said control member (8), from the time operating mode, in which each of said display organs (11, 12) reproduces its actions from the last dive with graduations of time and depth which are adapted to the parameters of said dive.

14. Diving watch (1) according to claim 13, **characterised in that** the electronic circuits are able to store the parameters of at least the last two dives, to select the parameters of one of said last dives in response to at least a first operation on a control member (8, 9, 10) and to actuate said corresponding historical mode in response to at least a second action on a control member (8, 9, 10).

15. Diving watch (1) according to claim 14 when it is dependent upon claim 11 or 12, **characterised in that** the electronic circuits (22) are able to control at least one liquid crystal screen (14, 15) in order to display at least identification data of that of said last dives which has been selected for said historical mode.

16. Diving watch according to claim 15, **characterised in that** the electronic circuits (22) are able to control said liquid crystal screen (14, 15) in order to display furthermore information relating to the practise of diving, which information is complementary to information indicated by said display organs (11, 12) in the historical mode.

17. Diving watch (1) according to any of the preceding claims, **characterised in that** it comprises a third analog display organ (30), the electronic circuits of the watch being able to control said third display organ in order that it indicates opposite said first graduations (16), in the diving mode, information relating to a depth, which information is complementary to information indicated by said first and second analog display organs (11, 12).

18. Diving watch (1) according to claim 17, **characterised in that** it comprises furthermore means for measuring the gas pressure in the cylinder of the user of the watch, the electronic circuits being able to calculate, in particular from said gas pressure measurement, the remaining autonomy substantially in real time and to deduce therefrom a depth value which is not to be exceeded by the user, said electronic circuits being able to control said third display organ (3) in order that it indicates the value of said depth which is not to be exceeded, in relation to said first graduations (16).

19. Diving watch (1) according to one of the claims 17 or 18, **characterised in that** said third display organ (30) indicates the seconds in time mode.

20. Method of displaying decompression stages to be effected during the ascent from a dive on an electronic diving watch with an analog display, the watch comprising a sealed housing (2) containing a clock movement which is surmounted by a dial (5), at least first graduations (16) which serve in particular for indicating a depth, said clock movement comprising electronic circuits (22) which comprise a time base and are able to generate time signals intended for motor means which control respectively at least a first (12) and a second (11) analog display organs, said display organs being disposed above the dial (5) in order to display the current time in a first time operating mode, the watch comprising furthermore a pressure sensor (21) which is able to produce electrical signals which are representative of the surrounding pressure and to supply said electrical signals to said electronic circuits (22), said electronic circuits likewise comprising memory means (26, 27), in which in particular there is stored a computer program which is obtained on the basis of a decompression algorithm and is able to define at least a duration and a depth of at least one decompression stage, said electronic circuits (22) being furthermore able to process in particular the signals which are generated by the pressure sensor (21) in order to validate the observance of said stage(s) which is/are to be effected during the ascent, the diving watch comprising at least a second operating mode, or diving mode, in which a display of data relating to the practise of diving is provided, the process comprising in particular the steps comprising:
a) processing of the signals generated by said pressure sensor (21) in relation to said time signals when they are representative of a dive,
b) transmitting the results of said processing to said memory means (26, 27),
c) controlling said first display organ (12) substantially in real time in order that it indicates the depth with respect to said first graduations (16),
d) defining at least one stage to be effected during the ascent when the results of said processing by means of the algorithm which is used require it, a stage being in particular defined by its depth and its duration,
e) controlling said second display organ (11) in order that it is positioned opposite the indication of the first graduations (16) corresponding to the depth of the first stage to be effected,
f) controlling said second display organ (11) when the results of said processing indicate that said stage has been effected correctly, in order that it is positioned opposite the indication of the depth of the following stage, in the case where there still remains at least one stage to be effected, or in order that it is positioned opposite the additional graduations (18, 19), which are placed on the dial (5), indicating to the wearer of the diving watch that he can resurface if the validated stage is the last stage to be effected.

21. Display method according to claim 20, when the diving watch likewise comprises at least one liquid crystal screen (14, 15), **characterised in that** in step e), said screen displays furthermore the remaining duration of the stage in progress, said duration being displayed substantially in real time dependent upon the results of said processing.

22. Display method according to claim 20 or 21, **characterised in that**, when the results of said processing by means of the algorithm which is used do not define a decompression stage to be effected during the ascent, it is provided that a stage is displayed, termed a comfort stage, the duration and the depth of which have respectively predefined values, by resuming steps e) and f) as defined in claim 20.

## Patentansprüche

1. Elektronische Taucheruhr (1) beinhaltend ein wasserdichtes Gehäuse (2), das ein Uhrwerk enthält, auf dem ein Zifferblatt (5) angebracht ist, wobei die Uhr wenigstens erste Graduierungen (16), beinhaltet, wobei das Uhrwerk elektronische Schaltungen (22) umfasst, die Zeitsignale für Motormittel erzeugen können, die jeweils wenigstens ein erstes (12) und ein zweites (11) analoges Anzeigeorgan steuern, wobei die besagten analogen Anzeigeorgane über dem Zifferblatt (5) angeordnet sind, um die aktuelle Zeit in einem ersten Modus, der als Zeitmodus bezeichnet wird, anzuzeigen, wobei die Uhr zudem einen Drucksensor (21) umfasst, der elektrische Signale erzeugen kann, welche repräsentativ für den umgebenden Druck sind, und um die besagten Signale an die besagten elektronischen Schaltungen (22) zu liefern, wobei die Taucheruhr wenigstens einen zweiten Modus, oder Tauchmodus, hat, in welchem eine Datenanzeige für Daten, die auf Tauchaktivitäten bezogen sind, vorgesehen ist, **dadurch gekennzeichnet, dass** die besagten Graduierungen (16) insbesondere für die Angabe einer Tiefe dienen, dass die besagten elektronischen Schaltungen (22) erste Mittel umfassen, die das erste analoge Anzeigeorgan (12) im Tauchmodus steuern können, um die Tiefe in Bezug auf die besagten ersten Graduierungen (16) anzugeben, und dass die besagten elektronischen Schaltungen auch zweite Mittel umfassen, welche fast jedereit eine minimale Tiefe definieren können, die von dem Uhrträger während des Aufstiegs eines Tauchgangs nicht überschritten werden soll, und die mit Hilfe eines im wesentlichen stufenlosen Dekompressionsalgorithmus berechnet wird, und welche das zweite analoge Anzeigeorgan (11) steuern können, um die besagte nicht zu überschreitende Tiefe im Wesentlichen in Echtzeit in Bezug auf die besagten ersten Graduierungen (16) anzugeben.

2. Taucheruhr (1) gemäss Anspruch 1, **dadurch gekennzeichnet, dass** die besagten zweiten Mittel ferner diskontinuierliche Dekompressionsparameter definieren können, welche wenigstens eine während des Aufstiegs eines Tauchgangs durchzuführende Druckausgleichspause umfassen, die von dem besagten Algorithmus berechnet werden, wobei eine Druckausgleichspause insbesondere durch ihre Tiefe und Dauer definiert wird, und welche der Reihe nach das besagte zweite Anzeigeorgan (11) in dem besagten Tauchmodus steuern können, um zuerst die Tiefe der während des Aufstiegs durchzuführenden Druckausgleichspausen in Bezug auf die besagten ersten Graduierungen (16), anzugeben, und in einem zweiten Schritt, dass der Taucher wieder auftauchen kann.

3. Taucheruhr (1), gemäss Anspruch 2 , **dadurch gekennzeichnet, dass** die besagten elektronischen Schaltungen (22) einen integrierten Schaltkreis umfassen, welcher insbesondere eine Zeitbasis beinhaltet, die die Tiefen und Dauer der jeweiligen durchzuführenden Druckausgleichspausen definieren können, insbesondere aus den von dem Drucksensor (21) generierten Signalen, wobei der integrierte Schaltkreis ferner Zeitintervalle messen kann, wenn die momentane Tiefe einen Wert erreicht und beibehält, der gleich einem für eine der Druckausgleichspausen definierten Werte ist, und welcher das besagte zweite Anzeigeorgan (11) steuert, um die Tiefe der nächsten durchzuführenden Druckausgleichspause anzugeben, wenn die durchgeführte Zeitintervallmessung einen Wert erreicht hat, der wenigstens gleich der für die besagte Druckausgleichspause definierten Dauer ist.

4. Taucheruhr (1) gemäss einem der Ansprüche 1 bis 3, **dadurch gekennzeichnet, dass** sie zusätzliche Graduierungen umfasst, die wenigstens eine erste Zone (18) beinhalten, in Bezug auf welche das besagte zweite Anzeigeorgan (11) dem Uhrträger angeben kann, dass sein Organismus im Vergleich zu seinem Normalzustand mit dem Tauchen verbundene physiologische Veränderungen aufweist.

5. Taucheruhr (1) gemäss Anspruch 4, **dadurch gekennzeichnet, dass** die besagten Graduierungen (16) eine zweite Zone (19) umfassen, die vorzugsweise eine andere Farbe als die erste Zone (18) besitzen, wobei die besagten zweiten Mittel das besagte zweite Anzeigeorgan (11) steuern können, um ferner dem Uhrträger anzugeben, in Bezug auf die besagte zweite Zone (19), dass sein Organismus signifikative physiologische tauchaktitätsbezogene Veränderungen aufweist.

6. Taucheruhr (1) gemäss Anspruch 5, **dadurch gekennzeichnet, dass** die besagten ersten und zweiten Zonen (18,19) sich auf einem Sektor mit einem Öffnungswinkel an der Spitze von wenigstens 15 Grad, vorzugsweise 30 Grad , erstrecken, und dass die besagten elektronischen Schaltungen (22) zusätzliche Mittel umfassen, um das besagte zweite Anzeigeorgan (11) in dem Tauchmodus zu steuern, um eine nicht zu überschreitende Höhe anzugeben, in Bezug auf die in den besagten ersten und zweiten Zonen (18,19) gelegenen Graduierungen, wobei die besagte Höhe von den von dem Organismus des Uhrträgers aufgewiesenen physiologischen Veränderungen abhängt.

7. Taucheruhr (1) gemäss einem der vorigen Ansprüche, **dadurch gekennzeichnet, dass** sie wenigstens ein Steuerorgan (8,9,10) umfasst, dessen Bewegungen durch die besagten elektronischen Schaltungen (22) detektiert werden, und dass letztere (22) in dem Tauchmodus wenigstens das erste Anzeigeorgan (12) steuern können, so dass es als Antwort auf ein Drücken auf das besagte Steuerorgan (8,9,10) die während eines aktuellen Tauchgangs maximal erreichte Tiefe angeben kann.

8. Taucheruhr (1) gemäss einem der vorigen Ansprüche, **dadurch gekennzeichnet, dass** die besagten elektronischen Schaltungen (22) das zweite Anzeigeorgan (11) steuern können, um wenigstens eine Druckausgleichspause, mit im voraus definierter Dauer und Tiefe, in Bezug auf die besagten ersten Graduierungen (16) während des Aufstiegs anzugeben.

9. Taucheruhr (1) gemäss einem der vorigen Ansprüche, **dadurch gekennzeichnet, dass** Mittel vorgesehen sind, um den Beginn eines Tauchgangs zu detektieren, und automatisch den Tauchmodus einzuschalten.

10. Taucheruhr (1) gemäss einem der vorigen Ansprüche, **dadurch gekennzeichnet, dass** die erste und zweite analoge Anzeigeorgane jeweils ein Minutenzeiger (12) bzw. ein Stundenzeiger (11) sind.

11. Taucheruhr (1) gemäss einem der vorigen Ansprüche, **dadurch gekennzeichnet, dass** sie zusätzliche Mittel umfasst, die wenigstens ein erstes Flüssigkristallanzeigefeld (14) steuern können, um insbesondere wenigstens eine erste auf Tauchaktivitäten bezogene Information anzuzeigen, die die von den ersten (12) und zweiten (11) Anzeigeorganen gelieferte Informationen ergänzen.

12. Taucheruhr (1) gemäss Anspruch 11, **dadurch gekennzeichnet, dass** die zusätzlichen Mittel auch wenigstens ein zweites Flüssigkristallanzeigefeld (14) steuern können, um wenigstens eine zweite auf Tauchaktivitäten bezogene Information anzuzeigen, die die von den ersten (12) und zweiten (11) Anzeigeorganen gelieferten Informationen ergänzen.

13. Taucheruhr (1) gemäss einem der vorigen Ansprüche, **dadurch gekennzeichnet, dass**, wenn sie wenigstens ein Steuerorgan beinhaltet (8,9,10), Mittel vorgesehen sind, so dass ein zusätzlicher Modus oder sogenannter Demonstrationsmodus als Antwort auf eine erste Betätigung des besagten Steuerorgans (8,9,10) aus dem Zeitmodus aktiviert werden kann, in welchem jedes der besagten Anzeigeorgane (11,12) sein Verhalten des letzten Tauchgangs mit an die Parameter des letzten Tauchgangs angepasster Zeit- und Tiefenskala wiedergibt.

14. Taucheruhr (1) gemäss Anspruch 13, **dadurch gekennzeichnet, dass** die elektronischen Schaltungen Parameter von wenigstens den zwei letzten Tauchgängen speichern können, Parameter von einem der letzten Tauchgänge als Antwort auf eine erste Betätigung des besagten Steuerorgans (8,9,10) auswählen können, und den entsprechenden Demonstrationsmodus als Antwort auf wenigstens eine zweite Betätigung des besagten Steuerorgans (8,9,10) aktivieren können.

15. Taucheruhr (1) gemäss Anspruch 14, wenn der von Anspruch 11 oder 12 abhängt, **dadurch gekennzeichnet, dass** die besagten elektronischen Schaltungen (22) wenigstens ein Flüssigkristallanzeigefeld (14,15) steuern können, um wenigstens Identifikationsdaten von demjenigen der letzten Tauchgängen, der für den Demonstrationsmodus ausgewählt worden ist, anzuzeigen.

16. Taucheruhr (1) gemäss Anspruch 15, **dadurch gekennzeichnet, dass** die besagten elektronischen Schaltungen (22) das besagte Flüssigkristallanzeigefeld (14,15) steuern können, um ferner auf eine Tauchaktivität bezogene Informationenen anzuzeigen, die die von den besagten Anzeigeorganen (11,12) angegebenen Informationen ergänzen.

17. Taucheruhr (1) gemäss einem der vorigen Ansprüche, **dadurch gekennzeichnet, dass** sie ein drittes analoges Anzeigeorgan (30) beinhaltet, wobei die elektronischen Schaltungen der Uhr das dritte Anzeigeorgan steuern können, damit es in dem Tauchmodus eine auf eine Tiefe bezogene Information in Bezug auf die ersten Graduierungen (16) angibt, die die von den besagten Anzeigeorganen (11,12) angegebenen Informationen ergänzen.

18. Taucheruhr (1) gemäss Anspruch 17, **dadurch gekennzeichnet, dass** sie ferner Mittel zum Messen des Gasdrucks in der Flasche des Trägers der Uhr umfasst, wobei die elektronischen Schaltungen die verbleibende Reichweite im Wesentlichen in Echtzeit insbesondere aus der besagten Gasdruckmessung berechnen können, und daraus einen Wert für eine von dem Benutzer nicht zu überschreitenden Tiefe folgern können, wobei die elektronischen Schaltungen das dritte Anzeigenorgan (30) steuern können, damit es den Wert der nicht zu überschreitenden Tiefe in Bezug auf die besagten ersten Graduierungen (16) angibt.

19. Taucheruhr (1) gemäss Anspruch 17 oder 18, **dadurch gekennzeichnet, dass** das dritte Anzeigeorgan (30) in dem Zeitmodus die Sekunden angibt.

20. Anzeigeverfahren von während der Aufstieg eines Tauchgangs durchzuführenden Druckausgleichspausen, auf einer elektronischen Taucheruhr (1) mit Analoganzeige, wobei die Uhr ein wasserdichtes Gehäuse (2) beinhaltet, das ein Uhrwerk enthält, auf dem ein Zifferblatt (5) angebracht ist, und wenigstens erste Graduierungen (16) umfasst, die insbesondere für eine Tiefeangabe dienen, wobei das Uhrwerk elektronische Schaltungen (22) umfasst, die eine Zeitbasis beinhalten und Zeitsignale für Motormittel erzeugen können, die jeweils wenigstens ein erstes (12) und ein zweites (11) analoges Anzeigeorgan steuern, wobei die besagten analogen Anzeigeorgane über dem Zifferblatt (5) angeordnet sind, um die aktuelle Zeit in einem ersten Modus, der als Zeitmodus bezeichnet wird, anzuzeigen, wobei die Uhr (1) ferner einen Drucksensor (21) umfasst, der elektrische Signale erzeugen kann, welche repräsentativ für den umgebenden Druck sind, und um die besagten Signale an die besagten elektronischen Schaltungen (22) zu liefern, wobei die besagten elektronischen Schaltungen auch Speichermittel (26,27) beinhalten, in welchen insbesondere ein Computerprogrammprodukt gespeichert ist, basierend auf einem Dekompressionsalgorithmus, und das wenigstens die Dauer und die Tiefe von wenigstens einer Druckausgleichspause definieren kann, wobei die besagten elektronischen Schaltungen (22) ferner insbesondere die von dem Drucksensor (21) generierten Signalen verarbeiten, um die Beachtung des oder der während des Aufstiegs durchzuführenden Druckausgleichspausen zu bestätigen, wobei die Tauchuhr wenigstens einen zweiten Betriebsmodus, oder Tauchmodus, umfasst, in welchem eine Anzeige von auf Tauchaktivitäten bezogenen Daten vorgesehen ist, wobei das Verfahren insbesondere die Schritte umfasst, welche bestehen aus:
a) verarbeiten der von dem Drucksensor (21) generierten Signalen im Verhältnis zu den Zeitsignalen, wenn diese repräsentativ für einen Tauchgang sind;
b) übermitteln der Resultate der besagten Verarbeitung an die Speichermittel (26,27);
c) steuern im Wesentlichen in Echtzeit des besagten ersten Anzeigeorgans (12), so dass es die Tiefe gegenüber den ersten Graduierungen (16) angibt;
d) definieren wenigstens einer während des Aufstiegs durchzuführender Druckausgleichspause, wenn die Resultate der besagten Verarbeitung durch den benutzten Algorithmus es verlangen, wobei eine Druckausgleichspause insbesondere durch ihre Dauer und Tiefe definiert ist,
e) steuern des besagten zweiten Anzeigeorgans (11) derart, dass es sich gegenüber die Angaben der ersten Graduierungen (16) positioniert, die der Tiefe der ersten durchzuführenden Druckausgleichspause entsprechen;
f) steuern des besagten zweiten Anzeigeorgans (11) derart, wenn die Resultate der besagten Bearbeitung angeben, dass die besagte Druckausgleichspause richtig durchgeführt worden ist, dass es sich gegenüber der Angabe der nächsten Druckausgleichpause positioniert, in dem Fall, dass noch eine Druckausgleichspause durchzuführen ist, oder dass es sich gegenüber zusätzlichen von dem Zifferblatt (5) getragenen Graduierungen (18,19) positioniert, und anzeigt, dass er auftauchen darf, wenn die bestätigte Druckausgleichspause die letzte durchzuführende Druckausgleichspause war.

21. Anzeigeverfahren gemäss Anspruch 20, wenn die Tauchuhr auch wenigstens ein erstes Flüssigkristallanzeigefeld (14) umfasst, **dadurch gekennzeichnet, dass** das Flüssigkristallanzeigefeld in dem Schritt e) ferner die verbleibende Zeitspanne der aktuellen Druckausgleichspause anzeigt, wobei die besagte Zeitspanne im Wesentlichen in Echtzeit abhängig von den Resultaten der besagten Bearbeitung aktualisiert wird.

22. Anzeigeverfahren gemäss Anspruch 20 oder 21, **dadurch gekennzeichnet, dass**, wenn die Resultate der besagten Bearbeitung mit Hilfe des benutzten Algorithmus keine während des Aufstiegs durchzuführende Druckausgleichpause definieren, das Anzeigen eine Druckausgleichspause vorgesehen ist, die als Komfortdruckausgleichspause bezeichnet wird, deren Dauer und Tiefe jeweils vordefinierte Werte aufweisen, indem die im Anspruch 20 definierte Schritte e) und f) wiederholt werden.
